# EUROPÄISCHE PATENTSCHRIFT

(11) **EP 1 637 393 B1**
(45) Veröffentlichungstag und Bekanntmachung des Hinweises auf die Patenterteilung: **08.06.2011**
(21) Anmeldenummer: 05019402.6
(22) Anmeldetag: 07.09.2005
(51) Int. Cl.: B60P 7/13, B60P 1/64

(54) **Einbau-Querträger zur Festlegung von Containern auf einem Fahrzeug**
Mounting beam for securing containers on vehicles
Montant de montage pour fixer des conteneurs sur des véhicules

(30) Priorität: 18.09.2004 DE 102004045665
(43) Veröffentlichungstag der Anmeldung: 22.03.2006
(73) Patentinhaber: Jost-Werke GmbH, 63263 Neu-Isenburg (DE)
(72) Erfinder: Paulekuhn, Hans-Peter, 34454 Bad Arolsen (DE); Bönsel, Sven, 63263 Neu-Isenburg (DE)
(74) Vertreter: Fuchs

(56) Entgegenhaltungen:
- EP-A- 0 934 848
- EP-A- 1 384 619
- DE-A1- 10 232 561

## Beschreibung

Die Erfindung betrifft einen Querträger zum stirnseitigen Einbau an ein Chassis mit einem Hohlprofil, an dessen beiden Enden zur Verriegelung von Containern jeweils ein Twistlock und ein Steckzapfen angeordnet sind, wobei die Steckzapfen jeweils an einer ersten Profilstange befestigt sind, die in Längsrichtung des Hohlprofils im Hohlprofil verschiebbar angeordnet sind, und die Twistlocks jeweils an einer zweiten Profilstange befestigt sind, wobei die ersten und zweiten Profilstangen unabhängig voneinander bewegbar sind.

Ein derartiger Querträger ist beispielsweise aus DE 102 32 561 A1 bekannt.

Auflieger zum Transport von Containern sind mit Verriegelungseinrichtungen zum Befestigen der Container versehen. Solche Auflieger können ein so genanntes Gooseneck-Chassis aufweisen. Das Gooseneck-Chassis ist unterteilt in einen kürzeren vorderen Abschnitt und einen längeren hinteren Abschnitt. Der hintere Abschnitt ist gegenüber dem vorderen Abschnitt tiefer gelegt in der Art, dass zwischen den beiden Abschnitten eine Höhendifferenz besteht.

Aufgrund des tiefer gelegten Abschnittes können mit dem Gooseneck-Chassis auch Container mit einer größeren Höhe transportiert werden.

Auf einem Gooseneck-Chassis können eine Vielzahl verschiedener Container befestigt und transportiert werden. Hierzu ist allerdings die Anordnung von mehreren verschiedenartigen Verriegelungselementen notwendig, um die einzelnen Containerbauarten entsprechend ihrer Anordnung auf dem Chassis befestigen zu können.

Daher ist am vorderen Ende des vorderen Abschnitts ein erster Querträger vorgesehen, an dessen beiden Enden sowohl ein Twistlock als auch ein Steckzapfen angeordnet sind. Der Twistlock ist auf der Oberseite des Querträgers angeordnet, wohingegen der Steckzapfen entgegengesetzt der Fahrtrichtung nach hinten ragt. Am hinteren Ende des Gooseneck-Chassis und somit am hinteren Ende des hinteren Abschnitts ist ebenfalls ein hinterster Querträger angeordnet, der ähnlich des vorderen Querträgers jeweils zwei Twistlocks aufweist, jedoch nicht über Steckzapfen verfügt. Zwischen den vorderen und hinteren Querträgern sind weitere Quertraversen und weitere Verriegelungen vorgesehen, die sämtlich als Twistlock ausgebildet sind. Diese betreffen aber nicht die vorliegende Erfindung.

Man unterscheidet Gooseneck-Container, Flachboden-Container und so genannte Euro-Container.

Die Gooseneck-Container weisen eine einheitliche Baulänge von 40 Fuß auf, wobei diese Container im vorderen Bereich einen Mitteltunnel, den so genannten Gooseneck-Tunnel zur Aufnahme eines höhergelegenen, vorderen Chassisabschnitts aufweisen.

Der auf dem Chassis befestigte Gooseneck-Container liegt nicht auf der Oberseite des vorderen Querträgers auf, sondern seitlich an diesem an, wobei die Steckzapfen in die vorderen Öffnungen der beiden vorderen Verriegelungsbeschläge des Gooseneck-Containers eingreifen, wodurch eine Arretierung des Containers im vorderen Abschnitt erfolgt. An seinem anderen Ende wird der Container durch die an der hinteren Quertraverse angeordneten Twistlocks auf dem Chassis fixiert. Diese Twistlocks greifen von unten in die an die Unterseite des Containers vorgesehenen Verriegelungsbeschläge ein.

Die so genannten 45 Fuß Euro-Container besitzen ähnlich den Gooseneck-Containem einen Tunnel, sind jedoch länger als diese. Solche überlangen Container sind im vorderen Bereich der Eckpfosten abgerundet, also in einem Bereich, wo sich die Befestigungsbeschläge befinden. Damit derartige überlange Container transportiert werden können, weisen sie nach innen versetzte Aufnahmeöffnungen auf, die mit den Steckzapfen am Auflieger zusammenarbeiten können. Dies bedingt, dass diese Steckzapfen, je nachdem, ob es sich um einen 40 Fuß Gooseneck-Container oder um einen 45 Fuß Euro-Container handelt, unterschiedliche Abstände zueinander haben müssen.

Die 40 Fuß oder 45 Fuß Flachboden-Container besitzen keinen Tunnel und liegen auf der Oberseite des vorderen Chassisabschnitts auf, wodurch an der hinteren Quertraverse höhenverstellbare Twistlocks erforderlich sind.

Eine für die vorderste Quertraverse bereitzustellende Vorrichtung zur Verriegelung eines Containers am Fahrzeugchassis wird beispielsweise in der deutschen Gebrauchsmusterschrift G 91 14 903.7 offenbart. Bei dieser Vorrichtung kann der Steckzapfen zwischen einer ausgefahrenen und zu einer eingefahrenen Position verschoben werden, wobei die ausgefahrene Position seine Arbeitsposition ist, in der er mit dem Verriegelungsbeschlag des Gooseneck-Containers ein Eingriff steht. Die Position der Twistlocks und der Steckzapfen kann bei dieser Ausführung nicht verändert werden.

Aus der EP 1 384 619 A1 ist ein Querträger bekannt, bei dem die beiden Twistiocks aus ihrer Arbeitsposition verschwenkt werden müssen, damit die Steckzapfen zugänglich sind. Erst dann ist es möglich, die Steckzapfen zur Einstellung unterschiedlicher Abstände in Längsrichtung des Querträgers zu verschieben. Ein solcher Querträger benötigt viel Platz und bedingt eine umständliche Handhabung.

Aufgabe der Erfindung ist es, einen Querträger mit Containerverriegelungen bereitzustellen, die zur Anpassung an verschiedene Containertypen auf einfache Weise verstellbar sein sollen, wobei die gesamte Anordnung kompakt ausgeführt sein soll.

Diese Aufgabe wird mit einem Querträger gelöst, bei dem die Twistlocks jeweils an einer zweiten Profilstange befestigt sind, die im Hohlprofil in Längsrichtung des Hohlprofils verschiebbar angeordnet sind, wobei die ersten und zweiten Profilstangen unabhängig voneinander verschiebbar sind.

Durch die Verschiebbarkeit der Profilstangen, die beide innerhalb des Hohlprofils angeordnet sind, wird die erforderliche Führung der Profilstangen in das Innere des Hohlprofils verlagert. Im Gegensatz zu schwenkbaren Vorrichtungen wird außerhalb des Hohlprofils kein Platz beansprucht, wenn die eine oder andere Containerverriegelung gerade nicht benötigt wird. Dadurch wird ein problemloser Anbau an das Chassis möglich. Im eingeschobenen Zustand liegen lediglich die Containerverriegelungen frei.

Dadurch, dass die Profilstangen vom Hohlprofil aufgenommen werden, werden diese sowohl vor Beschädigungen als auch vor Verschmutzungen geschützt. Die Funktionsfähigkeit bleibt dadurch länger erhalten als dies bei bekannten Vorrichtungen der Fall ist.

Da lediglich axiale Verschiebungen der Profilstangen und damit der Containerverriegelungen vorzunehmen sind, um die jeweilige Arbeitsposition von Twistlock oder Steckzapfen einzustellen, ist die Handhabung einfach.

Die Teleskopierbarkeit des Querträgers erlaubt beliebige Positionierungen, so dass die Containerverriegelungen an unterschiedliche Positionen der Befestigungsbeschläge der Container anpassbar sind.

Vorzugsweise sind die ersten und zweiten Profilstangen in Einbauposition in horizontaler Richtung nebeneinander im Hohlprofil angeordnet. Die unabhängige Verschiebbarkeit der Profilstangen wird dadurch erleichtert.

Vorzugsweise sind die Querschnitte der Profilstangen an den Innenquerschnitt des Hohlprofils angepasst. Dies bedeutet, dass mindestens die horizontalen Abmessungen der Profilstangen derart aufeinander abgestimmt sind, dass sie den Innenraum des Hohlprofils in horizontaler Richtung ausfüllen. Zusätzliche Führungselemente sind nicht erforderlich, weil jede Profilstange durch die benachbarte Profilstange und eine Wand des Hohlprofils geführt wird. In horizontaler Richtung wirkende Kräfte, die beim Anfahren und Abbremsen auftreten, werden vom Hohlprofil besser aufgenommen.

Vorzugsweise bestehen das Hohlprofil und die Profilstangen aus Vierkantrohren, weil diese eine gute Verschiebbarkeit mit einer großen Steifigkeit verbinden.

Der Steckzapfen ist vorzugsweise an einem Trägerkörper befestigt, der am Ende der ersten Profilstange angeordnet ist, wobei der Trägerkörper frontseitig abgeschrägt ist. Die frontseitige Abschrägung dient dazu, dass bei eingezogener Position der ersten Profilstange der vorgeschriebene Radius, der derzeit bei 2040 mm liegt, eingehalten wird. Diesem vorgeschriebenen Radius liegt der für Kurvenfahrt benötigte Platzbedarf an der Frontseite des Aufliegers zugrunde. Die erfindungsgemäße Anordnung hat den Vorteil, dass im Wesentlichen lediglich der Trägerkörper an diese Vorschrift angepasst sein muss und dass das Hohlprofil davon unberührt bleibt. Bei Änderungen der gesetzlichen Vorschriften braucht lediglich der Trägerkörper ausgetauscht zu werden.

Vorzugsweise ist der Trägerkörper in Einbauposition in horizontaler Richtung senkrecht zur Längsachse des Hohlprofils von einer Arbeitsstellung in eine Freigabestellung und umgekehrt verschiebbar. Dadurch wird es auf einfache Weise möglich, den Steckzapfen nach der Positionierung, beispielsweise des Gooseneck- oder des Euro-Containers, in die an der Vorderseite des Containers vorgesehene Stecköffnungen einzuschieben.

Der Trägerkörper und die erste Profilstange weisen vorzugsweise eine Verriegelungseinrichtung auf, mit der der Trägerkörper mindestens in seiner Arbeitsstellung an der Profilstange festlegbar ist. Hierzu ist vorzugsweise der Innenraum des Trägerkörpers seitlich zugänglich, wobei im Trägerkörper eine Betätigungseinrichtung für die Verriegelungseinrichtung angeordnet ist. Die Anordnung von Verriegelungseinrichtung und Betätigungseinrichtung in den Innenraum des Trägerkörpers trägt ebenfalls zur kompakten Bauweise bei.

Vorteilhafterweise ist auf dem Trägerkörper ein erstes Arretierungsmittel angeordnet. Dieses erste Arretierungsmittel wirkt mit einem zweiten Arretierungsmittel an der Unterseite des Verriegelungsgehäuses des Twistlocks zusammen, wenn dieser sich in Arbeitsposition befindet. Es wird dadurch auf einfache Weise eine Versteifung realisiert, so dass die in horizontaler Richtung wirkenden Kräfte vom Hohlprofil besser aufgefangen werden können.

Hierbei ist es weiterhin von Vorteil, wenn der Twistlock an einem Verriegelungsgehäuse befestigt ist, das am Ende der zweiten Profilstange angeordnet ist, wobei das Verriegelungsgehäuse sich über die erste Profilstange erstreckt. Dadurch wird es möglich, in der ausgezogenen Stellung das an der Unterseite des Verriegelungsgehäuses angeordnete zweite Arretierungsmittel mit dem ersten Arretierungsmittel an der Oberseite des Trägerkörpers in Eingriff zu bringen.

Geeignet für diese ersten und zweiten Arretierungsmittel sind beispielsweise Winkelschienen, die bei axialer Verstellung der Profilstangen sich ineinander schieben.

Der Innenraum des Verriegelungsgehäuses ist ebenfalls seitlich zugänglich, um den Twistlock in seiner Arbeitsstellung mit dem Befestigungsbeschlag des Containers zu verbinden und zu verriegeln. Die Verlagerung des Betätigungselementes für den Twistlock in das Innere des Verriegelungsgehäuses und den Endbereich des Hohlprofils trägt ebenfalls zu einer kompakten Bauweise bei.

Um die Profilstangen in der für die jeweiligen Container erforderlichen Positionen festzulegen, weisen die Profilstangen in den im Hohlprofil geführten Abschnitten jeweils mindestens eine Öffnung zur Aufnahme eines Steckbolzens auf.

Im Hohlprofil sind vorzugsweise ebenfalls Öffnungen zur Aufnahme von Steckbolzen vorgesehen. Die gewünschte Position ist immer dann erreicht, wenn die Öffnungen von Profilstange und Hohlprofil übereinander liegen. Vorzugsweise sind die Öffnungen derart angeordnet, dass die Positionen für Gooseneck-Container, Euro-Container und Flachboden-Container festgelegt sind.

Beispielhafte Ausführungsformen der Erfindung werden nachfolgend anhand der Zeichnungen näher erläutert.

Es zeigen:
- Figur 1: eine perspektivische Darstellung des rechten Teils eines Querträgers in der Position für einen 45 Fuß Euro-Container,
- Figur 2: eine weitere perspektivische Darstellung des in Figur 1 gezeigten Querträgers,
- Figur 3: die Draufsicht auf den rechten Teil des in den Figuren 1 und 2 gezeigten Querträgers,
- Figur 4: eine Seitenansicht des in den Figuren 1 bis 3 gezeigten Querträgers,
- Figur 5: die Draufsicht auf den in den Figuren 1 bis 4 gezeigten Querträger in einer Position für einen 40 Fuß Gooseneck-Container,
- Figur 6: eine Draufsicht auf den in den Figuren 1 bis 4 gezeigten Querträger in einer Position für einen Flachboden-Container.

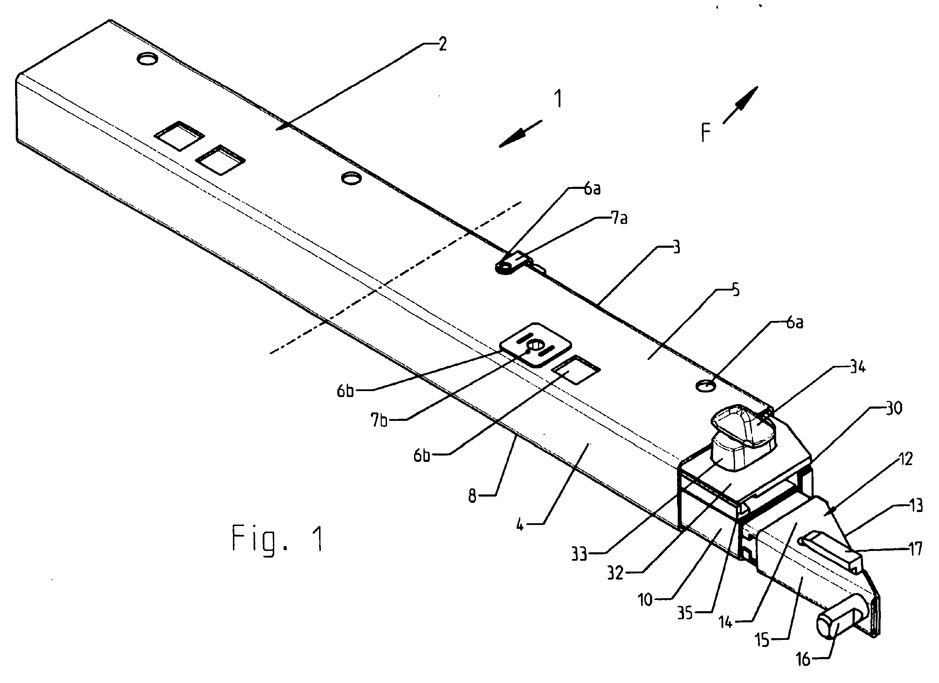

In der Figur 1 ist eine rückseitige, perspektivische Ansicht der rechten Seite eines Querträgers 1 perspektivisch dargestellt. Ein solcher Querträger 1 wird als vorderer Querträger beispielsweise auf einem Gooseneck-Auflieger montiert. Die Fahrtrichtung wird durch den Pfeil F angedeutet.

Der Querträger 1 weist ein Hohlprofil 2 in Form eines Vierkantrohres auf, in dem beidseitig erste Profilstangen 10 und zweite Profilstangen 30 in Längsrichtung des Querträgers 1 verschiebbar angeordnet sind. Da beide Seiten des Querträgers 1 identisch ausgeführt sind, reicht es aus, lediglich eine Seite zu beschreiben.

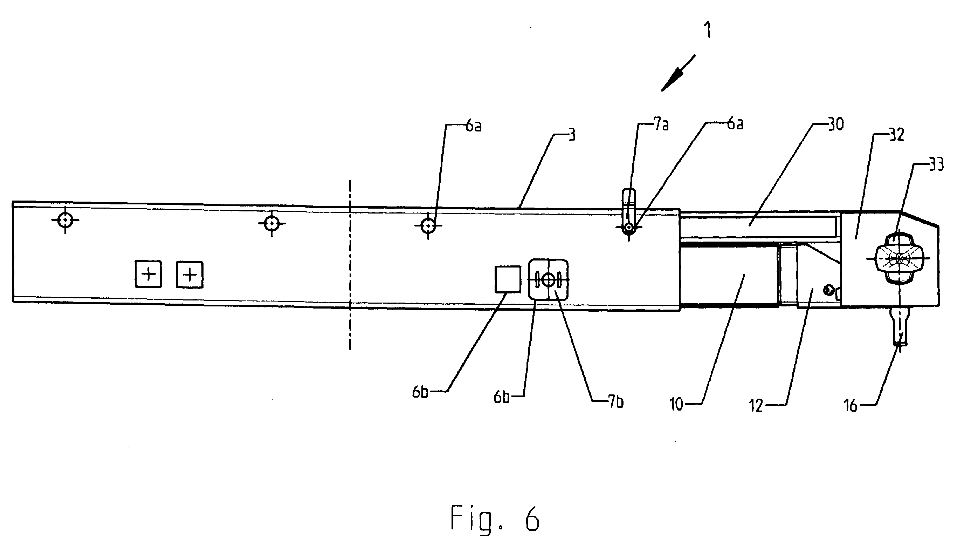

Die erste Profilstange 10 besteht ebenfalls aus einem Vierkantrohr, das auf der Bodenwand 8 und an der Rückwand 4 des Hohlprofils 2 anliegt. In horizontaler Richtung benachbart zur ersten Profilstange 10 ist die zweite Profilstange 30 angeordnet, wie dies aus der Figur 6 zu entnehmen ist. Auch die zweite Profilstange 30 ist ein Vierkantrohr und liegt zwischen der ersten Profilstange 10 und der Vorderwand 3.

Die erste Profilstange 10 trägt an ihrem vorderen Ende einen Trägerkörper 12, der in Draufsicht eine dreieckige oder keilförmige Kontur aufweist. Der Trägerkörper 12 besitzt dementsprechend eine abgeschrägte Vorderseite 13 und eine parallel zum Hohlprofil 2 ausgerichtete Rückwand 15, an der entgegen der Fahrtrichtung F der Steckzapfen 16 angeordnet ist. Dieser Steckzapfen 16 dient zur Befestigung eines 45 Fuß Euro-Containers oder eines 40 Fuß Gooseneck-Containers. In der hier gezeigten Position kann mittels des Steckzapfens ein 45 Fuß Euro-Container verriegelt werden.

Auf der Oberwand 14 des Trägerkörpers 12 ist ein erstes Arretierungsmittel in Form einer ersten Arretierungsschiene 17 angeordnet, die mit einem zweiten Arretierungsmittel 35 an der Unterseite des Verriegelungsgehäuses 32 in dessen ausgefahrener Position zusammenwirkt, wie dies im Zusammenhang mit der Figur 6 noch erläutert wird.

An der zweiten Profilstange 30 ist an der Oberseite das bereits erwähnte Verriegelungsgehäuse 32 angeordnet, das sich über die gesamte Breite des Hohlprofils 2 und somit auch über die erste Profilstange 10 erstreckt. Das Verriegelungsgehäuse 32 trägt den nach oben aufragenden Twistlock 33, der einen Drehzapfen 34 aufweist. In der in Figur 1 gezeigten Position befindet sich die zweite Profilstange 30 in zurückgezogener Position, in der der Twistlock 33 nicht benötigt wird.

Zur Festlegung der Profilstangen 10,30 sind in der Oberwand 5 des Hohlprofils 2 mehrere Öffnungen 6a, b beabstandet zueinander angeordnet. Die erste Profilstange besitzt ebenfalls Öffnungen, die in Figur 1 nicht zu sehen sind. Mittels eines Steckbolzens 7a, der in eine der Öffnungen 6a eingesteckt ist, erfolgt die Festlegung der ersten Profilstange 10.

Zur Festlegung der zweiten Profilstange 30 weist diese ebenfalls Öffnungen auf, wobei im Hohlprofil rechteckige Öffnungen 6b vorgesehen, in die Steckbolzen 7b, oder sog. Abstecker 7b eingesetzt werden können, die in die Öffnungen der zweiten Profilstange 30 eingreifen.

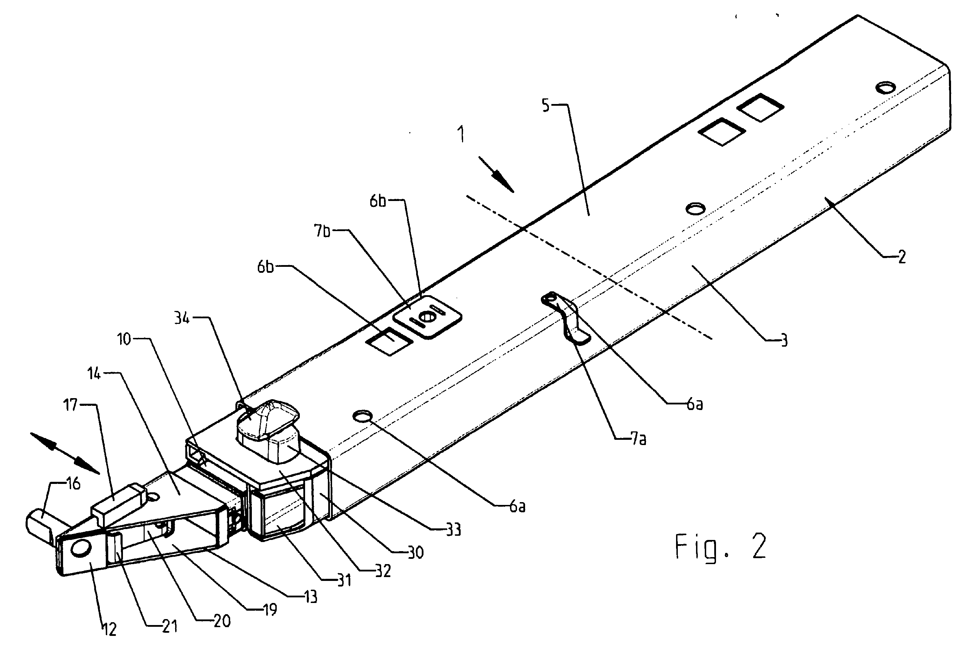

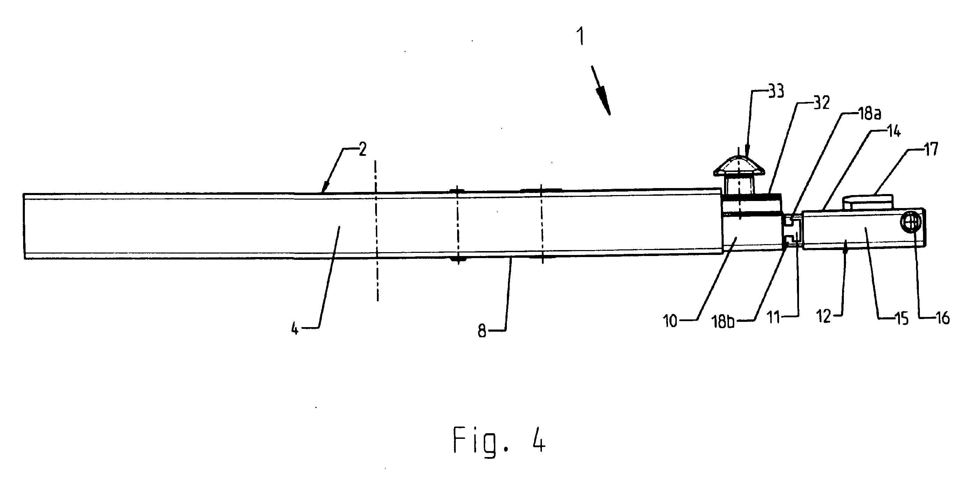

In der Figur 2 ist eine vorderseitige perspektivische Ansicht des Querträgers 1 dargestellt. In dieser Darstellung ist zu sehen, dass der Trägerkörper 12 an seiner abgeschrägten Vorderseite 13 offen ist, so dass der Innenraum 19 vom Bedienungspersonal zugänglich ist. Im Inneren des Trägerkörpers 12 ist eine Verriegelungseinrichtung 20 mit einem Betätigungshebel 21 angeordnet, wobei die Verriegelungseinrichtung im Wesentlichen aus einem Federhebel bestehen kann. Mittel dieser Verriegelungseinrichtung 20 ist die Fixierung des Trägerkörpers 12 an der ersten Profilstange 10 möglich. Der Trägerkörper 12 ist in horizontaler Richtung senkrecht zur Längsachse des Querträgers 1 verschiebbar an der ersten Profilstange 10 angeordnet, wie dies durch den Doppelpfeil angedeutet wird. Dies wird noch im Zusammenhang mit der Figur 4 im Einzelnen erläutert.

Die zweite Profilstange 30 besitzt eine abgeschrägte Vorderseite 31, wodurch eine weitere Anpassung an den gesetzlich vorgeschriebenen Radius vorgenommen wird. Das auf der zweiten Profilstange 30 befestigte Verriegelungsgehäuse 32 ist ebenfalls seitlich zugänglich, so dass der Drehzapfen 34 des Twistlocks 33 bedienbar ist.

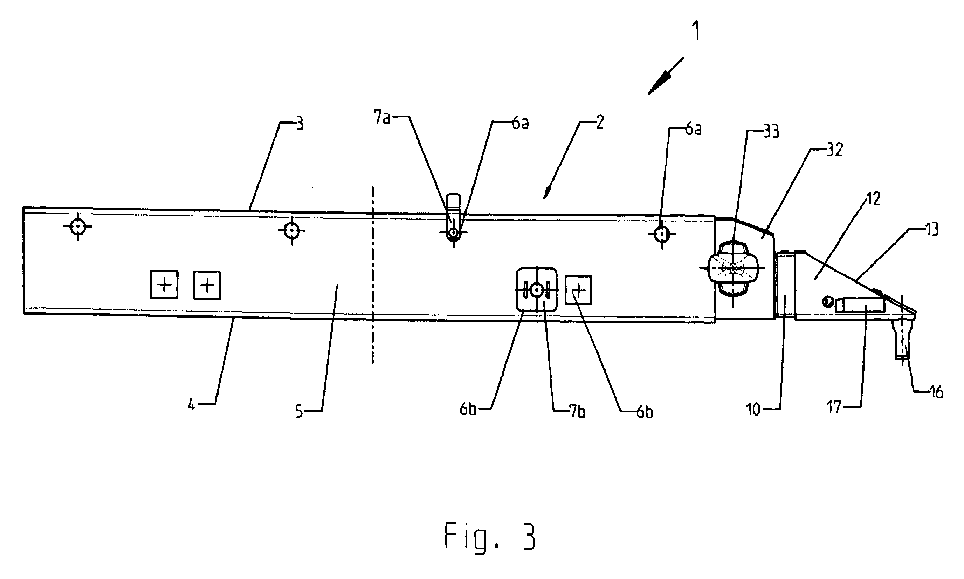

In der Figur 3 ist die Draufsicht auf die in den Figuren 1 und 2 dargestellte Anordnung zu sehen.

Die Figur 4 zeigt die Draufsicht auf die Rückwand 4 des Querträgers 1. Die erste Profilstange 10 besitzt an ihrem vorderen Ende eine T-förmige Schiene, die sich in horizontaler Richtung senkrecht zur Längsachse des Hohlprofils 2 erstreckt. An dieser T-förmigen Schiene 11 ist der Trägerkörper 12 verschiebbar angeordnet, der zu diesem Zweck zwei L-förmige Schienen 18a,18b aufweist, die die T-förmige Schiene 11 hintergreifen. Der Trägerkörper 12 ist somit von einer Arbeitsposition, in der der Steckzapfen in die korrespondierende Stecköffnung des Verriegelungsbeschlags des Containers eingreift, in eine Freigabestellung, in der der Steckzapfen aus der Stecköffnung herausgezogen ist, verschiebbar und umgekehrt.

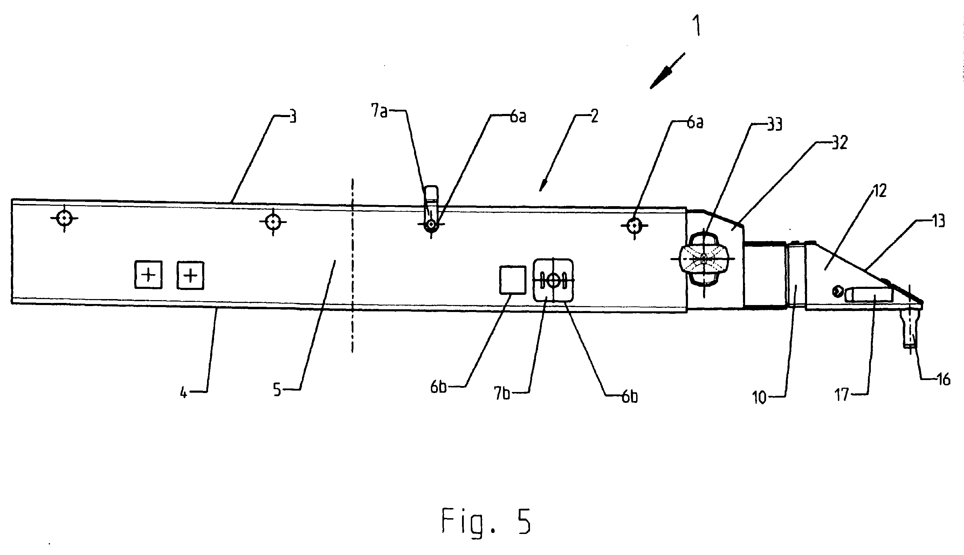

In der Figur 5 ist die Draufsicht auf den Querträger 1 dargestellt, wobei die erste Profilstange 10 gegenüber den zuvor gezeigten Darstellungen um eine bestimmte Strecke herausgezogen worden ist, so dass die Position des Steckzapfens 16 zur Aufnahme eines Gooseneck-Containers geeignet ist.

In der Figur 6 ist eine weitere Position dargestellt. Die zweite Profilstange 30 befindet sich in ihrer ausgefahrenen Position zur Aufnahme eines Flachboden-Containers. In dieser Stellung kommt der Twistlock zum Einsatz, während der Steckzapfen hierfür nicht benötigt wird. In dieser Position überfährt das Verriegelungsgehäuse 32 den Trägerkörper 12, so dass die Arretierungsmittel 17,35 an der Oberseite des Trägerskörpers 12 und an der Unterseite des Verriegelungsgehäuses 32 in Eingriff kommen. Hierbei stabilisiert der Trägerkörper 12 in Verbindung mit der ersten Profilstange 10 die zweite Profilstange 30, so dass die in horizontaler und vertikaler Richtung wirkenden Kräfte von dem Hohlprofil 2 aufgenommen werden können.

### Bezugszeichenliste

- 1: Querträger
- 2: Hohlprofil
- 3: Vorderwand
- 4: Rückwand
- 5: Oberwand
- 6a, b: Öffnung
- 7a, b: Steckbolzen
- 8: Bodenwand
- 10: erste Profilstange
- 11: T-Schiene
- 12: Trägerkörper
- 13: Vorderseite
- 14: Oberwand
- 15: Rückwand
- 16: Steckzapfen
- 17: erste Arretierungsschiene
- 18a,b: L-Schiene
- 19: Innenraum
- 20: Verriegelungseinrichtung
- 21: Betätigungshebel
- 30: zweite Profilstange
- 31: abgeschrägte Vorderseite
- 32: Verriegelungsgehäuse
- 33: Twistlock
- 34: Drehzapfen
- 35: zweite Arretierungsschiene

## Patentansprüche

1. Querträger zum stirnseitigen Einbau an ein Chassis mit einem Hohlprofil (2), an dessen beiden Enden zur Verriegelung von Containern jeweils ein Twistlock (33) und ein Steckzapfen (16) angeordnet sind, wobei die Steckzapfen (16) jeweils an einer ersten Profilstange (10) befestigt sind, die in Längsrichtung des Hohlprofils (2) im Hohlprofil (2) verschiebbar angeordnet sind, und die Twistlocks (33) jeweils an einer zweiten Profilstange (30) befestigt sind, wobei die ersten und zweiten Profilstangen (10,30) unabhängig voneinander bewegbar sind, **dadurch gekennzeichnet, dass** die zweiten Profilstangen (30) im Hohlprofil (2) in Längsrichtung des Hohlprofils (2) verschiebbar angeordnet sind, wobei die ersten und zweiten Profilstangen (10,30) unabhängig voneinander verschiebbar sind.

2. Querträger nach Anspruch 1, **dadurch gekennzeichnet, dass** in Einbauposition die ersten und zweiten Profilstangen (10,30) in horizontaler Richtung nebeneinander im Hohlprofil (2) angeordnet sind.

3. Querträger nach einem der Ansprüche 1 oder 2, **dadurch gekennzeichnet, dass** die Querschnitte der Profilstangen (10,30) an den Innenquerschnitt des Hohlprofils (2) angepasst sind.

4. Querträger nach einem der Ansprüche 1 bis 3, **dadurch gekennzeichnet, dass** das Hohlprofil (2) und die Profilstangen (10,30) Vierkantrohre sind.

5. Querträger nach einem der Ansprüche 1 bis 4, **dadurch gekennzeichnet, dass** der Steckzapfen (16) an einem Trägerkörper (12) befestigt ist, der am Ende der ersten Profilstange (10) angeordnet ist, wobei der Trägerkörper (12) frontseitig abgeschrägt ist.

6. Querträger nach Anspruch 5, **dadurch gekennzeichnet, dass** in Einbauposition der Trägerkörper (12) in horizontaler Richtung senkrecht zur Längsachse des Hohlprofils (2) von einer Arbeitsstellung in eine Freigabestellung und umgekehrt verschiebbar ist.

7. Querträger nach einem der Ansprüche 5 oder 6, **dadurch gekennzeichnet, dass** der Trägerkörper (12) und die erste Profilstange (10) eine Verriegelungseinrichtung (20) aufweisen, mit der der Trägerkörper (12) mindestens in Arbeitsstellung an der Profilstange (10) festlegbar ist.

8. Querträger nach einem der Ansprüche 5 bis 7, **dadurch gekennzeichnet, dass** der Innenraum (19) des Trägerkörpers (12) seitlich zugänglich ist, wobei im Trägerkörper (12) eine Betätigungseinrichtung (21) für die Verriegelungseinrichtung (20) angeordnet ist.

9. Querträger nach einem der Ansprüche 5 bis 8, **dadurch gekennzeichnet, dass** auf dem Trägerkörper (12) ein erstes Arretierungsmittel (17) angeordnet ist.

10. Querträger nach einem der Ansprüche 1 bis 9, **dadurch gekennzeichnet, dass** der Twistlock (33) an einem Verriegelungsgehäuse (32) befestigt ist, das am Ende der zweiten Profilstange (30) angeordnet ist, wobei das Verriegelungsgehäuse (32) sich über die erste Profilstange (10) erstreckt.

11. Querträger nach Anspruch 10, **dadurch gekennzeichnet, dass** der Innenraum des Verriegelungsgehäuses (32) seitlich zugänglich ist.

12. Querträger nach einem der Ansprüche 10 oder 11, **dadurch gekennzeichnet, dass** an der Unterseite des Verriegelungsgehäuses (32) ein zweites Arretierungsmittel (35) angeordnet ist, das in ausgezogener Position mit dem ersten Arretierungsmittel (17) zusammenwirkt.

13. Querträger nach einem der Ansprüche 1 bis 12, **dadurch gekennzeichnet, dass** die Profilstangen (10,30) in den im Hohlprofil (2) geführten Abschnitten jeweils mindestens eine Öffnung zur Aufnahme eines Steckbolzens (7a, 7b) aufweisen.

14. Querträger nach einem der Ansprüche 1 bis 13, **dadurch gekennzeichnet, dass** im Hohlprofil (2) zur Festlegung der Positionen der Profilstangen (10,30) Öffnungen (6a, b) zur Aufnahme von Steckbolzen (7a, b) vorgesehen sind.

## Claims

1. A crossbeam for frontal installation on a chassis, comprising a hollow sectional member (2) at the two ends of which a twistlock (33) and a plug-in pin (16) are disposed for securing containers, the plug-in pins (16) each being fastened to a first sectional bar (10) which is arranged to be displaceable in the hollow sectional member (2) in the longitudinal direction of the hollow sectional member (2), and the twistlocks (33) each being fastened to a second sectional bar (30), the first and second sectional bars (10, 30) being movable independently of one another, **characterised in that** the second sectional bars (30) are arranged to be displaceable in the hollow sectional member (2) in the longitudinal direction of the hollow sectional member (2), the first and second sectional bars (10, 30) being displaceable independently of one another.

2. A crossbeam according to claim 1, **characterised in that**, in the installed position, the first and second sectional bars (10, 30) are disposed beside each other in the horizontal direction in the hollow sectional member (2).

3. A crossbeam according to either of claims 1 and 2, **characterised in that** the cross-sections of the sectional bars (10, 30) are matched to the internal cross-section of the hollow sectional member (2).

4. A crossbeam according to any one of claims 1 to 3, **characterised in that** the hollow sectional member (2) and the sectional bars (10, 30) are rectangular tubes.

5. A crossbeam according to any one of claims 1 to 4, **characterised in that** the plug-in pin (16) is fastened to a carrier body (12) disposed at the end of the first sectional bar (10), the carrier body (12) being chamfered at its front face.

6. A crossbeam according to claim 5, **characterised in that**, in the installed position, the carrier body (12) is displaceable in the horizontal direction perpendicular to the longitudinal axis of the hollow sectional member (2) from an operative position to a release position and *vice versa.*

7. A crossbeam according to either of claims 5 and 6, **characterised in that** the carrier body (12) and the first sectional bar (10) have a locking device (20) with which the carrier body (12) can be fixed to the sectional bar (10) at least in the operative position.

8. A crossbeam according to any one of claims 5 to 7, **characterised in that** the interior (19) of the carrier body (12) is accessible from the side, an actuating device (21) for the locking device (20) being disposed in the carrier body (12).

9. A crossbeam according to any one of claims 5 to 8, **characterised in that** a first arresting means (17) is disposed on the carrier body (12).

10. A crossbeam according to any one of claims 1 to 9, **characterised in that** the twistlock (33) is fastened to a locking housing (32) disposed at the end of the second sectional bar (30), the locking housing (32) extending over the first sectional bar (10).

11. A crossbeam according to claim 10, **characterised in that** the interior of the locking housing (32) is accessible from the side.

12. A crossbeam according to either of claims 10 and 11, **characterised in that** a second arresting means (35) is disposed on the underside of the locking housing (32), which arresting means (35) cooperates in the extended position with the first arresting means (17).

13. A crossbeam according to any one of claims 1 to 12, **characterised in that** the sectional bars (10, 30) each have, in the portions that are guided in the hollow sectional member (2), at least one aperture for receiving a plug-in bolt (7a, 7b).

14. A crossbeam according to any one of claims 1 to 13, **characterised in that** apertures (6a, b) for receiving plug-in bolts (7a, b) are provided in the hollow sectional member (2) for fixing the positions of the sectional bars (10, 30).

## Revendications

1. Support transversal conçu pour être intégré frontalement dans un châssis, comprenant un profilé creux (2) aux deux extrémités duquel un verrou tournant (33) et un tenon emboîtable (16) sont respectivement disposés en vue du verrouillage de conteneurs, les tenons emboîtables (16) étant respectivement fixés à une première barre profilée (10) logée à coulissement dans le profilé creux (2), dans la direction longitudinale dudit profilé creux (2), et les verrous tournants (33) étant respectivement fixés à une seconde barre profilée (30), lesdites premières et secondes barres profilées (10, 30) étant mobiles indépendamment les unes des autres,
**caractérisé par le fait que** les secondes barres profilées (30) sont logées à coulissement dans le profilé creux (2), dans la direction longitudinale dudit profilé creux (2), les premières et secondes barres profilées (10, 30) étant aptes à coulisser indépendamment les unes des autres.

2. Support transversal selon la revendication 1, **caractérisé par le fait que** les premières et secondes barres profilées (10, 30) sont agencées, en position intégrée, avec juxtaposition mutuelle horizontale dans le profilé creux (2).

3. Support transversal selon l'une des revendications 1 ou 2, **caractérisé par le fait que** les sections transversales des barres profilées (10, 30) sont adaptées à la section transversale intérieure du profilé creux (2).

4. Support transversal selon l'une des revendications 1 à 3, **caractérisé par le fait que** le profilé creux (2) et les barres profilées (10, 30) sont des tubulures carrées.

5. Support transversal selon l'une des revendications 1 à 4, **caractérisé par le fait que** le tenon emboîtable (16) est fixé à un corps de support (12) disposé à l'extrémité de la première barre profilée (10), ledit corps de support (12) étant biseauté frontalement.

6. Support transversal selon la revendication 5, **caractérisé par le fait que** le corps de support (12) peut coulisser horizontalement en position intégrée, perpendiculairement à l'axe longitudinal du profilé creux (2), d'une position de travail à une position de libération, et inversement.

7. Support transversal selon l'une des revendications 5 ou 6, **caractérisé par le fait que** le corps de support (12) et la première barre profilée (10) présentent un dispositif de verrouillage (20) par lequel ledit corps de support (12) peut être consigné à demeure sur ladite barre profilée (10), au moins en position de travail.

8. Support transversal selon l'une des revendications 5 à 7, **caractérisé par le fait que** l'espace interne (19) du corps de support (12) est accessible latéralement, ledit corps de support (12) renfermant un dispositif d'actionnement (21) dédié au dispositif de verrouillage (20).

9. Support transversal selon l'une des revendications 5 à 8, **caractérisé par le fait qu'**un premier moyen d'arrêt (17) est disposé sur le corps de support (12).

10. Support transversal selon l'une des revendications 1 à 9, **caractérisé par le fait que** le verrou tournant (33) est fixé à un boîtier de verrouillage (32) situé à l'extrémité de la seconde barre profilée (30), ledit boîtier de verrouillage (32) s'étendant au-dessus de la première barre profilée (10).

11. Support transversal selon la revendication 10, **caractérisé par le fait que** l'espace interne du boîtier de verrouillage (32) est accessible latéralement.

12. Support transversal selon l'une des revendications 10 ou 11, **caractérisé par le fait qu'**un second moyen d'arrêt (35), placé à la face inférieure du boîtier de verrouillage (32), coopère avec le premier moyen d'arrêt (17) en position déployée.

13. Support transversal selon l'une des revendications 1 à 12, **caractérisé par le fait que** les barres profilées (10, 30) sont respectivement pourvues, dans les régions guidées dans le profilé creux (2), d'au moins un orifice conçu pour recevoir une cheville emboîtable (7a, 7b).

14. Support transversal selon l'une des revendications 1 à 13, **caractérisé par le fait que** des orifices (6a, b) conçus pour recevoir des chevilles emboîtables (7a, b) sont pratiqués dans le profilé creux (2), en vue de consigner fermement les emplacements des barres profilées (10, 30).
